# EUROPEAN PATENT APPLICATION

(11) **EP 2 108 627 A1**
(43) Date of publication of application: **14.10.2009**
(21) Application number: 09381010.9
(22) Date of filing: 11.03.2009
(51) Int. Cl.: C04B 5/00

(54) **Procedure for recycling and evaluation of aluminium slag**

(30) Priority: 01.04.2008 ES 200800902
(71) Applicant: Refineria Diaz, S.A., 28947 Fuenlabrada (ES)
(72) Inventor: Quintanilla Lopez, Juan Antonio, 28947 Fuenlabrada (Madrid) (ES); Ascacibar Ugarte, Mónica, 28947 Fuenlabrada (Madrid) (ES)
(74) Representative: Martin Santos, Victoria Sofia

(57) **Abstract**

Procedure for recycling and evaluation of aluminium slag, specifically re-melted slag, as aggregate in bituminous plants.

## Description

### OBJECT OF THE INVENTION

This invention refers to a recycling and evaluation procedure for aluminium slag and specifically re-melted slag.

### BACKGROUND TO THE INVENTION

Various procedures are known for recycling of aluminium slag, for example the patent document no. ES-2009527 describes a procedure for recycling aluminium slag in such a way that salt and solid products are obtained from scrap.
The procedure in this invention is an option for use of aluminium slag for its evaluation and use as aggregate in bitumen plants.

### DESCRIPTION OF THE INVENTION

The problem resolved in this invention is the ability to use re-melted aluminium slag in a way which will not harm the environment.

This waste is toxic and hazardous, and should be treated through an Authorised Manager and therefore processing costs are high.

With the procedure described in this invention the aluminium slag may be used as a raw material, ie. aggregate, in other processes.

The solution is to mix the re-melted aluminium slag with other aggregates, in order to make them appropriate for use in bituminous mixtures.

The procedure described in this invention permits toxic and hazardous waste management costs of re-melted aluminium slag to be dispensed with, and raw material is supplied to the process of generating bituminous mixtures, thus reducing the environmental problem.

In accordance with the invention, the procedure refers to the recycling and evaluation of re-melted aluminium slag which includes the mixing of aluminium slag with aggregate in the proportion of a maximum content of slag of 20% of weight of the final product, for its use in bituminous mixtures.

In order to use the re-melted aluminium slag in a bituminous mixture, it is necessary to comply with the requirements of the standard UNE-EN 13043:2002 Aggregates for bituminous mixtures and surface treatments for roads, airports, and other paved areas, making it suitable for use in bituminous mixtures.

If the aluminium slag is not treated with the procedure described in this invention, it cannot be used as aggregate in said mixtures.

### PREFERRED EMBODIMENT OF THE INVENTION

Slag is an undesirable waste product deriving from scrap recovery. The recovery process involves crushing and sieving of the waste and separation of iron, using magnets.

Aluminium slag in this example of an embodiment has at least 5% Al₂O₃ .

In a preferred embodiment of the invention, the amount of slag in the mixing process is 10% in weight. 10% of the slag is mixed with 90% of aggregate, in a homogeniser.

The aggregate with which the slag is mixed in this example of an embodiment is silica sand.

This mixture may subsequently be used in bituminous mixtures as an aggregate.

If this mixing is not carried out, the aluminium slag does not have the appropriate characteristics for use as aggregate in bituminous mixtures.

Aggregates may be characterised, among other values, by density and only aluminium slag has sufficient density to be used in bituminous mixtures following mixing of the invention.

The density of the mixture is measured in this example of the invention in order to check whether it is adequate or not, using a pycnometer, and the result is an apparent real density of particles of 2,310 mg/m³, density, particle density following furnace drying of 2,280 mg/m³, density of saturated particles with dry surface of 2,290 mg/m³, water absorption 0,43%.

Other significant values are granulometry 0/1 (d/D), with this granulometry value, the category of aggregate for bituminous mixtures is G_{f}85, and the fines content is category f₁₆.

The essential nature of this invention is not altered in any way by variations in materials, form, shape and arrangement of the component elements which are described in a manner which is in no way restrictive but which is sufficient for an expert to proceed to its reproduction

## Claims

1. ^{a} . -Procedure for recycling and evaluating re-melted aluminium slag which comprises the mixing of aluminium slag with aggregate with a maximum slag content of 20% of the weight of the final product, for use in bituminous mixtures.
